# EUROPÄISCHE PATENTSCHRIFT

(11) **EP 1 535 710 B1**
(45) Veröffentlichungstag und Bekanntmachung des Hinweises auf die Patenterteilung: **05.07.2006**
(21) Anmeldenummer: 04027004.3
(22) Anmeldetag: 12.11.2004
(51) Int. Cl.: B27M 3/00, A47B 96/20, B32B 21/08, B27N 5/00, E06B 3/70, B27N 7/00, B44C 5/04

(54) **Verfahren zur Herstellung einer Deckschicht, Deckschicht und Möbelplatte mit einer Deckschicht**
Method of manufacturing a cover layer, a cover layer and a furniture panel with a cover layer.
Procédé de fabrication d'une couche recouvrante, couche recouvrante et plaque de meuble avec couche recouvrante

(30) Priorität: 25.11.2003 DE 10355361
(43) Veröffentlichungstag der Anmeldung: 01.06.2005
(73) Patentinhaber: Vietmeyer, Adolf, 32108 Bad Salzuflen (DE)
(72) Erfinder: Vietmeyer, Adolf, 32108 Bad Salzuflen (DE)
(74) Vertreter: Dantz, Jan Henning

(56) Entgegenhaltungen:
- DE-A1- 2 639 190
- DE-A1- 3 801 486
- DE-A1- 3 926 161
- DE-U1- 20 212 046
- FR-A- 1 042 466
- FR-A- 2 119 268

## Beschreibung

Die vorliegende Erfindung betrifft ein Verfahren zur Herstellung einer Deckschicht für eine Möbelplatte, eine Deckschicht für Möbel und eine Möbelplatte.

Aus der DE 38 01 486 ist ein Verfahren zur Herstellung einer Möbelfrontplatte bekannt, bei dem eine zunächst ebene Platte auf einer Seite mit einer Folie oder einem Furnier beschichtet wird und anschließend unter Druck und Wärmezufuhr eine Verformung unter gleichzeitiger Verbindung der Folie oder dem Furnier mit der Platte stattfindet. Nachteilig bei diesem Verfahren ist, dass in den Randbereichen der Platte ohne weiteres erkennbar ist, dass es sich nicht um eine Massivholzplatte handelt. Ferner müssen zur Verformung der Platte relativ hohe Kräfte aufgewendet werden.

Aus der EP 11 23 672 ist ein Verfahren zur Herstellung einer gewölbten Möbelplatte bekannt, bei der an gegenüberliegenden Seiten einer Span-, Faser- oder Leichtholzplatte eine Leiste aus Massivholz angeleimt wird. Anschließend wird die Front- und Rückseite mit einem Furnier oder einer Folie beschichtet und die so gebildete Einheit wird über eine Formpresse plastisch verformt. Zwar besitzt die Möbelplatte randseitig Leisten aus Massivholz, allerdings sind zur Bildung einer Möbelplatte mehre einzelne Schichten erforderlich, was einerseits optisch erkennbar ist und andererseits eine Nachbearbeitung der verformten Möbelplatte im Randbereich notwendig macht.

Es ist daher Aufgabe der vorliegenden Erfindung ein Verfahren zur Herstellung einer Deckschicht für eine Möbelplatte und eine Deckschicht bereitzustellen, die im optisch sichtbaren Bereich mit Massivholz versehen ist und verarbeitungsfertig zu einer Möbelplatte zusammengesetzt werden kann.

Diese Aufgabe wird mit einem Verfahren zur Herstellung einer Deckschicht mit den Merkmalen des Anspruches 1 und einer Deckschicht für Möbel mit den Merkmalen des Anspruches 5 gelöst.

Bei dem erfindungsgemäßen Verfahren wird randseitig mindestens eine Massivholzleiste an einer Span-, Faser- oder Leichtholzplatte angeklebt, diese dann zumindest an einer Vorderseite mit einem Furnier oder einer Folie belegt und anschließend wird die Einheit aus Span-, Faser- oder Leichtholzplatte, Massivholzleiste und Furnier oder Folie mittels einer Matrize und einer Patrize verpresst und profiliert. Anschließend wird die Rückseite der so hergestellten Deckschicht plangeschliffen. Dadurch kann die Deckschicht mit der ebenen Rückseite mit einer weiteren Platte zu einer Möbelplatte zusammengesetzt werden. Die Deckschicht muss hierfür nicht mehr gesondert bearbeitet werden. Bei dem Verpressen und Profilieren der Deckschicht lassen sich unterschiedlichste Formen herstellen, wobei durch die vergleichsweise dünne Ausbildung der Deckschicht die aufzuwendenden Kräfte eher gering sind. Zusätzlich besteht der Vorteil, dass im optisch sichtbaren Bereich der Deckschicht Massivholz angeordnet ist, was von den meisten Verbrauchern als höherwertig empfunden wird.

In vorteilhafter Weise wird ein Randbereich der Deckschicht nachbearbeitet, sodass die Deckschicht beim Herstellungsverfahren schon die endgültige Form erhält. Bei der Nachbearbeitung können beispielsweise die Kanten rund geschliffen werden oder andere Bearbeitungsschritte vorgenommen werden.

Gemäß einer bevorzugten Ausführungsform der Erfindung werden beim Profilieren Rillen oder Rippen eingeformt, die sich im Wesentlichen senkrecht zu der Massivholzleiste erstrecken. Bei Möbelfronten wird es als optisch ansprechend empfunden, wenn die Front aus mehreren Abschnitten besteht, die vertikal voneinander beabstandet sind und beispielsweise eine sogenannte Bretteroptik erzeugen. Die Rillen oder Rippen bieten dann eine entsprechende Untergliederung, wobei an den sichtbaren vertikalen Randseiten dann die Massivholzleisten angeordnet sind.

Bei der erfindungsgemäßen Deckschicht sind an der Vorderseite Profilierungen eingeformt und die Rückseite ist plangeschliffen. Dadurch kann die Deckschicht einfach auf eine ebene oder gerundete Platte aufgeklebt werden, um eine Möbelfront herzustellen. Die entsprechenden Platten können in hohen Stückzahlen bereitgestellt werden und es können für unterschiedliche Typen von Möbelfronten nur andere Deckschichten angebracht werden.

Gemäß einer bevorzugten Ausführungsform sind die Massivholzleiste und das Furnier der Deckschicht aus derselben Holzart hergestellt. Dadurch wird für den Betrachter der Übergang zwischen Massivholzleiste und Furnier kaum sichtbar. Zusätzlich kann auch an der Rückseite der Span-, Faser- oder Leichtholzplatte und der Massivholzleiste ein Furnier angebracht sein, das dann zumindest teilweise plangeschliffen ist. Dann lässt sich einerseits eine gute Haftung zwischen Deckschicht und einer Platte erreichen und andererseits ist der Unterschied zu einer Schicht aus Massivholz kaum erkennbar.

Aufgrund der Profilierungen weist die Deckschicht vorzugsweise Bereiche mit unterschiedlicher Dicke auf. Die Profilierungen können dabei als Rillen oder Rippen eingeformt sein, die sich im Wesentlichen senkrecht zu den Massivholzleisten erstrecken, sodass diese in horizontaler Richtung angeordnet sein können und die Massivholzleisten dann an den stärker beachteten vertikalen Randseiten angeordnet sind. Die Profilierungen können dabei durch plastische Umformung hergestellt sein.

Erfindungsgemäß wird auch eine Möbelplatte mit einer entsprechenden Deckschicht bereitgestellt. Die Möbelplatte kann in einem mittleren Bereich eine Span-, Faser- oder Leichtholzplatte aufweisen, die randseitig mit einer Leiste aus Massivholz verklebt ist, die benachbart zu der Massivholzleiste der Decksicht angeordnet ist. Dann können auch gerundete Kanten hergestellt werden und der Betrachter nimmt die Übergänge zwischen den Leisten aus Massivholz und dem Furnier kaum wahr. Wenn zusätzlich die Möbelplatte beidseitig mit einer Deckschicht, vorzugsweise aus Furnier, versehen ist, wird die Möbelplatte als Massivholzplatte eingeschätzt, kann jedoch aufgrund des nicht sichtbaren Innenlebens leichter ausgebildet sein. Für die formschöne Gestaltung der Möbelplatte ist an zwei gegenüberliegenden Randseiten eine Furnierkante angeklebt und der Übergang zwischen Randseite und Vorderseite ist rund geschliffen.

Die Erfindung wird nachfolgend anhand eines Ausführungsbeispieles mit Bezug auf die beigefügten Zeichnungen näher erläutert. Es zeigen:
- Figuren 1A und 1B: zwei Ansichten des Grundkörpers für die Herstellung einer erfindungsgemäßen Deckschicht;
- Figur 2: eine Seitenansicht des mit Furnier belegten Grundkörpers der Figuren 1A und 1B;
- Figuren 3A und 3B: zwei Ansichten der Deckschicht nach dem Verpressen;
- Figuren 4A und 4B: zwei Ansichten der erfindungsgemäßen Deckschicht nach dem Planschleifen der Rückseite;
- Figur 5: eine Seitenansicht einer Möbelplatte mit einer erfindungsgemäßen Deckschicht;
- Figur 6: eine geschnittene Seitenansicht der Möbelplatte der Figur 5 bei der randseitigen Bearbeitung;
- Figur 7: eine perspektivische Ansicht der Möbelplatte der Figur 5 nach Fertigstellung des Randbereiches, und
- Figur 8: eine perspektivische Ansicht der Möbelplatte der Figur 7.

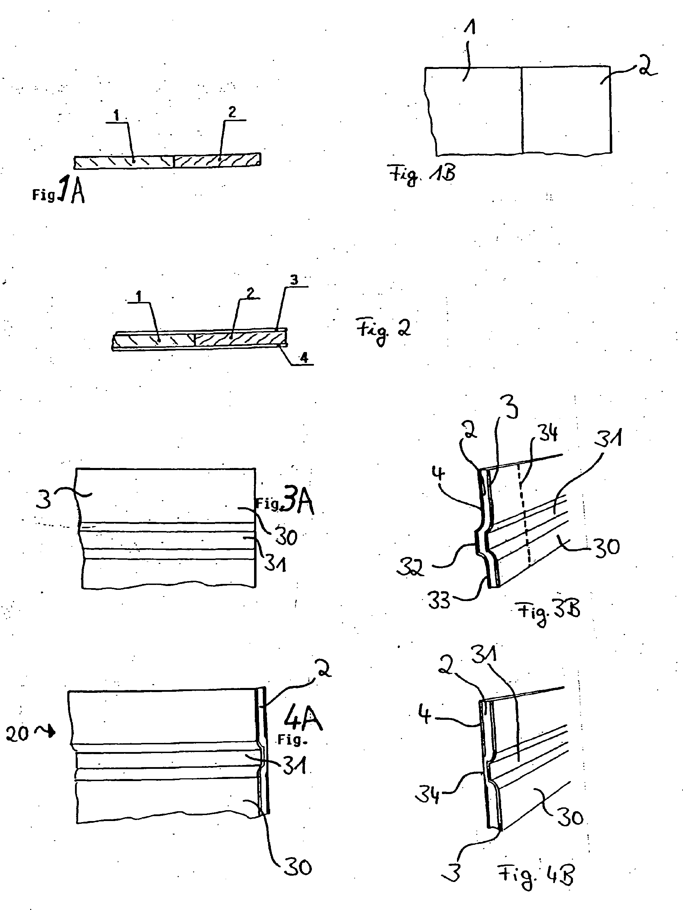

In den Figuren 1A und 1B ist der Zustand zu Beginn der Herstellung einer erfindungsgemäßen Deckschicht gezeigt. Eine etwa 2,5 bis 3,5 mm starke mitteldichte Faserplatte 1 wird randseitig an gegenüberliegenden Seiten mit einer 2,5 bis 3,5 mm starken Massivholzleiste verklebt. Statt einer mitteldichten Faserplatte 1 kann auch eine Span-, Faser- oder Leichtholzplatte eingesetzt werden, die durch Verpressen verformbar ist. Die Größe der Platte 1 hängt von der jeweiligen Möbelfront ab, die mit der Deckschicht versehen wird.

Anschließend wird gemäß Figur 2 ein Furnier 3 auf eine Vorderseite gelegt wobei die Holzart des Furniers 3 vorzugsweise der Holzart der Massivholzleiste 2 entspricht. Optional kann auch an der Rückseite ein weiteres Furnier 4 als Blindfurnier vorgesehen werden.

Wie in Figuren 3A und 3B zu sehen ist, wird diese Einheit aus mitteldichter Faserplatte 1, randseitig angeordneten Massivholzleisten 2 und Furnieren 3 und 4 verpresst und plastisch verformt, wobei hierfür eine entsprechende Matrize und Patrize eingesetzt werden. Durch die Verformung werden an der Vorderseite Rillen 31 erzeugt, die durch ebene Abschnitte 30 voneinander beabstandet sind. An der gegenüberliegenden Rückseite bilden sich entsprechende Vorsprünge 32 aus, die durch ebene Abschnitte 33 voneinander beabstandet sind. Da das Material nicht wesentlich verdrängt wird, bildet sich im Bereich einer Rille 31 an der gegenüberliegenden Seite ein entsprechender Vorsprung 32 aus. Die Rillen 31 sind im Wesentlichen senkrecht zu den Massivholzleisten 2 angeordnet, die mit einer gestrichelten Linie 34 angedeutet sind. Von außen ist jedoch der Übergang zwischen mitteldichter Faserplatte 1 und Massivholzleiste 2 nicht mehr sichtbar.

Anschließend wird die Rückseite der so gebildeten Deckschicht 20 plangeschliffen. Wie in Figur 4A und 4B zu sehen ist, sind an der Vorderseite die Rillen 31 eingeformt und sind durch das Furnier 3 bedeckt. An der Rückseite hingegen wird durch das Abschleifen das Furnier 4 teilweise entfernt und ist nur noch in den ebenen Bereichen 33 vorhanden. In dem Bereich der Rillen 31 bildet sich an der Rückseite Streifen 34 aus, in dessen Bereich die Wandstärke der Deckschicht 20 geringer ist als in den übrigen Bereichen.

Die so gebildete Deckschicht 20 kann randseitig noch geschliffen und bearbeitet werden um dann verlegefertig zusammengesetzt werden zu können. Im sichtbaren Bereich sind an den vertikalen Seiten jeweils die Massivholzleisten 2 und das Furnier 3 an der Vorderseite angeordnet.

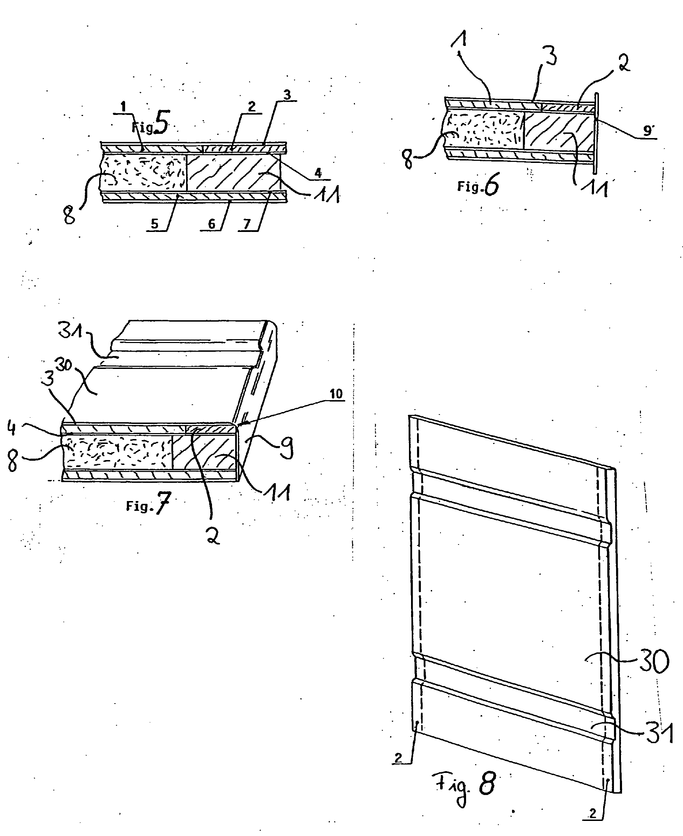

Ein Ausführungsbeispiel einer mit der Deckschicht 20 versehenen Möbelplatte ist in Figur 5 dargestellt. Die Möbelplatte weist an der oberen Seite die Deckschicht 20 auf und ist in einem mittleren Dickenbereich aus einer beliebigen Holzplatte 8, wie einer Spanplatte, einer MDF-Platte oder einer anderen Platte gebildet, die randseitig mit einer Leiste 11 aus Massivholz verklebt ist. An der Unterseite ist eine weitere Deckschicht vorgesehen, die aus einer 2,5 bis 3,5 mm starken MDF-Platte 5, einem äußeren Furnier 6 und einem inneren Furnier 7 gebildet ist. Das Furnier 6 ist aus derselben Holzart hergestellt, wie das Furnier 3, die Massivholzleiste 2 und die Leiste.

Wie in Figur 6 gezeigt ist, kann die so gebildete Platte randseitig noch abgeschliffen und mit einer Furnierkante 9 versehen werden. Dadurch wird im sichtbaren Bereich weitestmöglich mit Furnieren gearbeitet, um ein optisch ansprechendes Erscheinungsbild zu bieten. Die Furnierkante 9 wird randseitig mit einem Überstand aufgeklebt, wobei der Überstand dann abgeschnitten wird.

Wie in Figur 7 zu sehen ist, kann die Furnierkante 9 einerseits abgeschnitten werden und andererseits Übergang zwischen Furnierkante 9 und Vorderseite mit dem Furnier 3 eine Rundung 10, beispielsweise zwischen 2 und 5 mm Radius eingeschliffen werden. Optisch sichtbar bleibt dann neben der Furnierkante 9 ein kleiner Streifen der Massivholzleiste 2 und 3, also alles Bauteile, die aus Massivholz gebildet sind. Es ist auch möglich, einen größeren Radius vorzusehen, ohne dass der Eindruck verloren geht, dass es sich um eine Möbelplatte aus Massivholz handelt.

In Figur 8 ist die fertige Möbelplatte dargestellt. Die Vorderseite weist horizontale Rillen 31 auf, die durch ebene Abschnitte 30 voneinander beabstandet sind, wobei im sichtbaren Bereich das Furnier 3 liegt. Randseitig sind die Massivholzleisten 2 an gegenüberliegenden Seiten angeordnet.

Die Erfindung ist nicht auf das dargestellte Ausführungsbeispiel beschränkt. Beispielsweise kann die Deckschicht 20 auch auf irgendeiner anderen Platte beklebt werden. Statt einer ebenen Platte kann auch eine gekrümmte oder gewellte Platte vorgesehen werden, die dann mit der Deckschicht versehen wird. Die Deckschicht 20 kann ferner statt auf einer Platte für Möbel auch als ein Zimmertürdeck verwendet werden.

Für besonders tiefe Profilierungen ist es möglich, die Dicke der Deckschicht größer auszubilden, insbesondere können auch zwei Deckschichten 20 übereinander angeordnet werden, um besonders große Rundungen im Randbereich einer Platte zu realisieren.

## Patentansprüche

1. Verfahren zur Herstellung einer Deckschicht (20) für eine Möbelplatte, mit den folgenden Schritten:
- randseitiges Ankleben mindestens einer Massivholzleiste (2) an einer Span-, Faser- oder Leichtholzplatte (1);
- Belegen der Span-, Faser- oder Leichtholzplatte (1) und der Massivholzleiste (2) zumindest an einer Vorderseite mit einem Furnier (3) oder einer Folie;
- Verpressen und Profilieren der Einheit aus Span-, Faser- oder Leichtholzplatte (1), Massivholzleiste (2) und Furnier (3) oder Folie mittels einer Matrize und einer Patrize, und
- Planschleifen der Rückseite der so hergestellten Deckschicht (20).

2. Verfahren nach Anspruch 1, **dadurch gekennzeichnet, dass** ein Randbereich der Deckschicht (20) nachbearbeitet wird.

3. Verfahren nach Anspruch 1 oder 2, **dadurch gekennzeichnet, dass** beim Profilieren Rillen (31) oder Rippen eingeformt werden, die sich im wesentlichen senkrecht zu der Massivholzleiste (2) erstrecken.

4. Verfahren nach einem der Ansprüche 1 bis 3, **dadurch gekennzeichnet, dass** die Span-, Faser- oder Leichtholzplatte (1) vor dem Verpressen beidseitig mit einem Furnier (3, 4) oder einer Folie belegt wird.

5. Deckschicht (20) für Möbel, mit einer Span-, Faser- oder Leichtholzplatte (1), die zumindest an einer Seite mit einer Massivholzleiste (2) verbunden ist und an einer Vorderseite ein Furnier (3) oder eine Folie an der Span-, Faser- oder Leichtholzplatte (1) und der Massivholzleiste (2) angeordnet ist, **dadurch gekennzeichnet, dass** an der Deckschicht (20) an der Vorderseite Profilierungen (31) eingeformt sind und die Rückseite plangeschliffen ist.

6. Deckschicht nach Anspruch 5, **dadurch gekennzeichnet, dass** die Massivholzleiste (2) und das Furnier (3) aus derselben Holzart hergestellt sind.

7. Deckschicht nach Anspruch 5 oder 6, **dadurch gekennzeichnet, dass** an der Rückseite der Span-, Faser- oder Leichtholzplatte (1) und der Massivholzleiste (2) ein Furnier (4) angebracht ist, das zumindest teilweise plangeschliffen ist.

8. Deckschicht nach einem der Ansprüche 5 bis 7, **dadurch gekennzeichnet, dass** die Deckschicht (20) Bereiche mit unterschiedlicher Dicke aufweist.

9. Deckschicht nach einem der Ansprüche 5 bis 8, **dadurch gekennzeichnet, dass** als Profilierungen (31) Rillen oder Rippen eingeformt sind, die sich im Wesentlichen senkrecht zu den Massivholzleisten (2) erstrecken.

10. Deckschicht nach einem der Ansprüche 5 bis 9, **dadurch gekennzeichnet, dass** die Profilierungen (31) durch plastische Umformung hergestellt sind.

11. Deckschicht nach einem der Ansprüche 5 bis 10, **dadurch gekennzeichnet, dass** an zwei gegenüberliegenden Seiten je eine Massivholzleiste (2) an der Span-, Faser- oder Leichtholzplatte (1) angeklebt ist.

12. Deckschicht nach einem der Ansprüche 5 bis 11, **dadurch gekennzeichnet, dass** die Span-, Faser- oder Leichtholzplatte (1) als mitteldichte Faserplatte ausgebildet ist.

13. Möbelplatte mit einer Deckschicht (20) nach einem der Ansprüche 5 bis 12.

14. Möbelplatte nach Anspruch 13, **dadurch gekennzeichnet, dass** die Möbelplatte eine Span-, Faser- oder Leichtholzplatte (8) aufweist, die randseitig mit einer Leiste (11) aus Massivholz verklebt ist, die benachbart zu der Massivholzleiste (2) der Deckschicht (20) angeordnet ist.

15. Möbelplatte nach Anspruch 13 oder 14, **dadurch gekennzeichnet, dass** die Möbelplatte beidseitig mit einer Deckschicht (20, 5, 6, 7) versehen ist.

16. Möbelplatte nach einem der Ansprüche 13 bis 15, **dadurch gekennzeichnet, dass** an zwei gegenüberliegenden Randseiten der Möbelplatte eine Furnierkante (9) angeklebt ist und der Übergang zwischen Randseite und Vorderseite rund geschliffen ist.

## Claims

1. Method of manufacturing a top layer (20) of a furniture panel, comprising the following steps:
- adhesively bonding of the edge of at least one solid wood strip (2) to a particleboard, a fibreboard or light wood board (1);
- covering of the particleboard, fibreboard or light wood board (1) and the solid wood strip (2) with a veneer (3) or a sheet at least on the front;
- pressing and profiling of the unit comprising particleboard, fibreboard or light wood board (1), solid wood strip (2) and veneer (3) or sheet by means of a female die and a male die, and
- surface grinding of the back of the top layer (20) thus produced.

2. Method according to Claim 1, **characterized in that** an edge region of the top layer (20) is finished.

3. Method according to Claim 1 or 2, **characterized in that** grooves (31) or ribs which extend substantially perpendicular to the solid wood strip (2) are formed during the profiling.

4. Method according to Claims 1 to 3, **characterized in that** the particleboard, fibreboard or light wood board (1) is covered on both side with a veneer (3, 4) or a sheet before the pressing.

5. Top layer (20) for furniture, comprising a particleboard, fibreboard or light wood board (1) which is bonded to a solid wood strip (2) at least on one side, and a veneer (3) or a sheet is arranged on the front or on the particleboard, fibreboard or light wood board (1) and the solid wood strip (2), **characterized in that** profiles (31) are formed on the top layer (20) on the front, and the back is surface-ground.

6. Top layer according to Claim 5, **characterized in that** the solid wood strip (2) and the veneer (3) are produced from the same wood type.

7. Top layer according to Claim 5 or 6, **characterized in that** a veneer (4) which is at least partly surface-ground is applied to the back of the particleboard, fibreboard or light wood board (1) and of the solid wood strip (2).

8. Top layer according to any of Claims 5 to 7, **characterized in that** the top layer (20) has regions of different thickness.

9. Top layer according to any of Claims 5 to 8, **characterized in that** grooves or ribs which extend substantially perpendicularly to the solid wood strips (2) are formed as profiles (31).

10. Top layer according to any of Claims 5 to 9, **characterized in that** the profiles (31) are produced by plastic deformation.

11. Top layer according to any of Claims 5 to 10, **characterized in that** one solid wood strip (2) each is adhesively bonded to the particleboard, fibreboard or light wood board (1) on two opposite sides.

12. Top layer according to any of Claims 5 to 11, **characterized in that** the particleboard, fibreboard or light wood board (1) is in the form of medium density fibreboard.

13. Furniture panel having a top layer (20) according to any of Claims 5 to 12.

14. Furniture panel according to Claim 13, **characterized in that** the furniture panel has a particleboard, fibreboard or light wood board (8) which is adhesively bonded at the edge to a strip (11) of solid wood which is arranged adjacent to the solid wood strip (2) of the top layer (20).

15. Furniture panel according to Claim 13 or 14, **characterized in that** the furniture panel is provided with a top layer (20, 5, 6, 7) on both sides.

16. Furniture panel according to any of Claims 13 to 15, **characterized in that** a veneer edge (9) is adhesively bonded to two opposite edges of the furniture panel, and the transition between edge and front is ground so as to be round.

## Revendications

1. Procédé de fabrication d'une couche recouvrante (20) pour un panneau de meuble, comportant les étapes suivantes :
- collage sur le bord d'au moins une baguette (2) de bois massif sur un panneau (1) de particules, de fibres ou de bois léger ;
- pose d'un placage (3) ou d'une feuille sur le panneau (1) de particules, de fibres ou de bois léger et sur la baguette (2) de bois massif au moins sur une face frontale ;
- pressage et profilage de l'unité constituée du panneau (1) de particules, de fibres ou de bois léger, de la baguette (2) de bois massif et du placage (3) au moyen d'une matrice et d'un poinçon ; et
- ponçage plan du dos de la couche recouvrante (20) ainsi fabriquée.

2. Procédé selon la revendication 1, **caractérisé en ce qu'**une zone de bord de la couche recouvrante (20) est rectifiée.

3. Procédé selon la revendication 1 ou 2, **caractérisé en ce que**, lors du profilage, des rainures (3) ou membrures sont réalisées, qui s'étendent pour l'essentiel perpendiculairement à la baguette (2) de bois massif.

4. Procédé selon l'une des revendications 1 à 3, **caractérisé en ce qu'**avant le pressage, le panneau (1) de particules, de fibres ou de bois léger est recouvert sur chaque face par un placage (3, 4) ou une feuille.

5. Couche recouvrante (20) pour meuble, avec un panneau (1) de particules, de fibres ou de bois léger qui est relié sur au moins un côté à une baguette (2) de bois massif, et sur une face frontale est placé un placage (3) ou une feuille sur le panneau (1) de particules, de fibres ou de bois léger et la baguette (2) de bois massif, **caractérisée en ce que** des profilages (31) sont réalisés sur la couche recouvrante (20) sur la face frontale et le dos est poncé plan.

6. Couche recouvrante selon la revendication 5, **caractérisée en ce que** la baguette (2) de bois massif et le placage (3) sont fabriqués dans la même essence de bois.

7. Couche recouvrante selon la revendication 5 ou 6, **caractérisée en ce qu'**au dos du panneau (1) de particules, de fibres ou de bois léger et de la baguette (2) en bois léger est placé un placage qui est au moins partiellement poncé plan.

8. Couche recouvrante selon l'une des revendications 5 à 7, **caractérisée en ce que** la couche recouvrante (20) présente des zones de différentes épaisseurs.

9. Couche recouvrante selon l'une des revendications 5 à 8, **caractérisée en ce que**, comme profilages (31), on forme des nervures ou des membrures qui s'étendent pour l'essentiel perpendiculairement aux baguettes (2) en bois massif.

10. Couche recouvrante selon l'une des revendications 5 à 9, **caractérisée en ce que** les profilages (31) sont fabriqués par façonnage plastique.

11. Couche recouvrante selon l'une des revendications 5 à 10, **caractérisée en ce que** sur deux côtés opposés, une baguette (2) de bois massif est collée à chaque fois sur le panneau (1) de particules, de fibres ou de bois léger.

12. Couche recouvrante selon l'une des revendications 5 à 11, **caractérisée en ce que** le panneau (1) de particules, de fibres ou de bois léger est conformé en panneau de fibres de densité moyenne.

13. Panneau de meuble avec une couche recouvrante (20) selon l'une des revendications 5 à 12.

14. Panneau de meuble selon la revendication 13, **caractérisé en ce que** le panneau de meuble présente un panneau (1) de particules, de fibres ou de bois léger qui est collé au bord avec une baguette (11) en bois massif, qui est placée au voisinage de la baguette (2) de bois massif de la couche recouvrante (20).

15. Panneau de meuble selon la revendication 13 ou 14, **caractérisé en ce que** le panneau de meuble est muni d'une couche recouvrante (20, 5, 6, 7) sur les deux faces.

16. Panneau de meuble selon l'une des revendications 13 à 15, **caractérisé en ce que** sur deux faces de bord opposés du panneau de meuble est collé un bord en placage (9) et la transition entre la face de bord et la face frontale est arrondie par ponçage.
